(19) **Europäisches Patentamt European Patent Office Office européen des brevets**

(11) **EP 4 357 670 B1**

(12) **EUROPEAN PATENT SPECIFICATION**

(45) Date of publication and mention
of the grant of the patent:
**15.04.2026 Bulletin 2026/16**

(51) International Patent Classification (IPC):
*F22B 1/28* (2006.01)     *A47J 27/04* (2006.01)
*F22B 35/18* (2006.01)

(21) Application number: **23201484.5**

(52) Cooperative Patent Classification (CPC):
**F22B 1/285; A47J 27/04; F22B 35/18**

(22) Date of filing: **03.10.2023**

(54) **ESTIMATION PROCEDURES FOR A STEAM GENERATION SYSTEM**

SCHÄTZVERFAHREN FÜR EIN DAMPFERZEUGUNGSSYSTEM

PROCÉDURES D'ÉSTIMATION POUR UN SYSTÈME DE GÉNÉRATION DE VAPEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.10.2022 US 202217937621**

(43) Date of publication of application:
**24.04.2024 Bulletin 2024/17**

(73) Proprietor: **Beko Europe Management S.r.l.
20156 Milano (IT)**

(72) Inventors:
• **Gigante, Alessandro
BENTON HARBOR, 49022 (US)**
• **MINETTO, Luca
BENTON HARBOR, 49022 (US)**
• **ROSSIGNOLO, Giampiero
BENTON HARBOR, 49022 (US)**

(74) Representative: **Buzzi, Notaro & Antonielli d'Oulx
S.p.A.
Corso Vittorio Emanuele II, 6
10123 Torino (IT)**

(56) References cited:
**EP-A1- 1 975 308     EP-A1- 3 112 765
EP-A1- 3 872 404     WO-A1-2022/017799**

**Description**

**FIELD OF THE** INVENTION

The present invention generally relates to a steam generation system, and, more specifically, to liquid estimation in a steam generation system.

## BACKGROUND

Cooking appliances, particularly stoves, ovens, microwaves, steamers, and the like, are provided with steam generator assemblies. Cooking with steam, or at least partially with steam, is generally regarded as a healthier and, oftentimes, faster alternative than many other cooking means. As a result, various steam generator assemblies have become a popular addition to cooking appliances. These steam generator assemblies typically include a water circuit that includes a water reservoir, a steam generator, and a steam outlet. In operation, water from the water reservoir is routed into the steam generator whereat it at least partially turns to steam. The steam is then released through the steam outlet and into a cooking cavity to heat and cook foodstuff within the cooking cavity.
WO 2022/017799 A1 and EP 3 872 404 A1 disclose steam generation systems according to the preamble of claim 1.
After a cooking cycle, water remaining in the steam generator is pumped back into the water reservoir with a drain pump. The drain pump traditionally generates noise, particularly, when the water level in the steam generation assembly is not accurately estimated. More specifically, when the water is not estimated, the drain pump will continue to operate (e.g., a dry cycle) after the steam generator is empty. These dry cycles are loud and can negatively impact the drain pump over time. Traditional water regulation assemblies utilize methods with set variables that do not account for cycle variations. Cycle variations may become more relevant over operational life as components age and mineral deposits (e.g., limescale) are formed. In addition to changes over operational life, various other conditions can result in cycle variations. These other conditions include voltage variations, environmental temperatures, and part variations. As such, these traditional methods with set variables do not accurately allow water estimation.
Accordingly, the present invention provides liquid estimation in a steam generation system that accounts for conditions that impact cycle variations.

## SUMMARY OF THE INVENTION

According to one aspect of the present invention a method of estimating fluid in a steam generation system includes determining a first steam flow rate of a steam generator. During a present steam cycle, determine a quantity of liquid remaining in the one or more liquid reservoirs by determining a time the steam generator injected steam and multiplying the time by the first steam flow rate. Based on the first steam flow rate, determine a time remaining before the quantity of liquid remaining in the one or more liquid reservoirs is below a threshold and the one or more liquid reservoirs needs to be refilled.
According to another aspect of the present invention, a method of estimating fluid in a steam generation system includes determining a first steam flow rate of a steam generator for a present steam cycle. After the present steam cycle, fill the steam generator with a quantity of liquid past a minimum level obtained by a first sensor to a maximum level obtained by a second sensor. Run the steam generator until the quantity of liquid in the steam generator returns to the minimum level. Divide a volume between the minimum level and the maximum level by the time the steam generator was running to determine a second steam flow rate.
According to another aspect, a method of estimating fluid in a steam generation system includes, before a first steam cycle, determining a first drainage flow rate of a drainage pump by measuring a time to reduce a liquid level in a steam generator from a maximum level to a minimum level with input only from the drainage pump. After the first steam cycle, actuate the drainage pump until the liquid level in the steam generator is equal to the minimum level.
These and other features, advantages, and objects of the present invention will be further understood and appreciated by those skilled in the art by reference to the following specification, claims, and appended drawings. **BRIEF DESCRIPTION OF THE DRAWINGS**
In the drawings:

FIG. 1 is a schematic view of a steam generation system for a cooking appliance according to an aspect of the present invention;
FIG. 2A is a schematic view of a fluid level sensor measuring liquid at a minimum level in a steam generator of the steam generation system according to an aspect of the present invention;
FIG. 2B is a schematic view of a fluid level sensor measuring liquid at a maximum level in the steam generator according to an aspect of the present invention;

FIG. 3 is a schematic view of a control system of the steam generation system according to an aspect of the present invention;

FIG. 4 is a first method flow chart of a liquid estimation method according to an aspect of the present invention; and

FIG. 5 is a first method flow chart of a system management method according to an aspect of the present invention.

The components in the figures are not necessarily to scale, emphasis instead being placed upon illustrating the principles described herein.

## DETAILED DESCRIPTION

The present illustrated embodiments reside primarily in combinations of method steps and apparatus components related to liquid (i.e., fluid) estimation in a steam generation system. Accordingly, the apparatus components and method steps have been represented, where appropriate, by conventional symbols in the drawings, showing only those specific details that are pertinent to understanding the embodiments of the present invention so as not to obscure the invention with details that will be readily apparent to those of ordinary skill in the art having the benefit of the description herein. Further, like numerals in the description and drawings represent like elements.

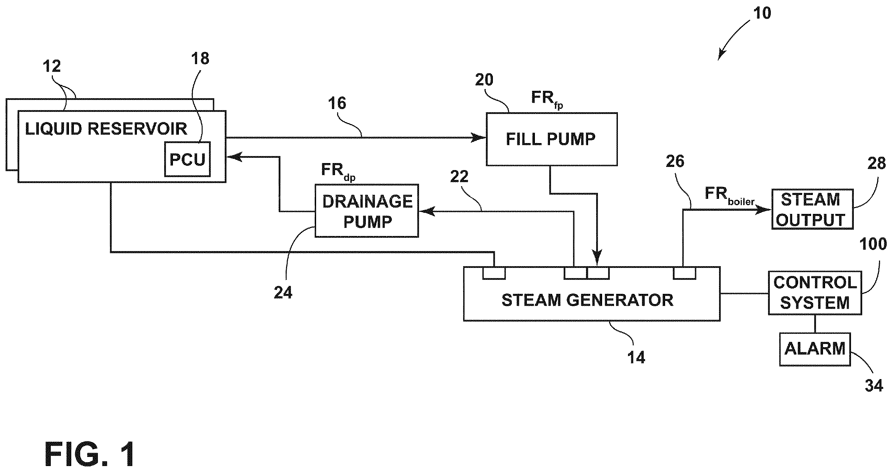

For purposes of description herein, the terms "upper," "lower," "right," "left," "rear," "front", "vertical," "horizontal," and derivatives thereof shall relate to the invention as oriented in FIG. 1. Unless stated otherwise, the term "front" shall refer to the surface of the element closer to an intended viewer, and the term "rear" shall refer to the surface of the element further from the intended viewer. However, it is to be understood that the invention may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

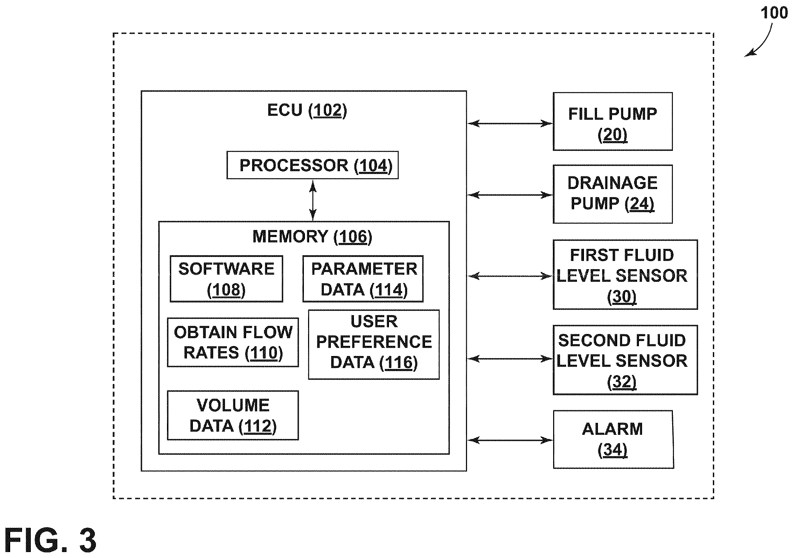

Referring initially to FIG. 1, reference numeral 10 generally designates a steam generation system for a cooking appliance. The steam generation system 10 includes at least one liquid reservoir 12 (e.g., a single, a pair, three or more liquid reservoirs 12), which may include a liquid-containing body (e.g., water), a manual fill port, a connection to a plumbing system of a building for automatic filling, or a combination thereof. The liquid reservoir 12 fluidically connects to a steam generator 14 via a first fluid line 16. The steam generator 14 heats liquid from the liquid reservoir 12 at least partially converting the liquid into a steam. The liquid reservoir 12 may include a pressure control unit 18 ("PCU"), which may be configured to both generate and reduce a pressure within the liquid reservoir 12. For example, the pressure control unit 18 may include a pressure generator, a pressure release valve, and/or a pressure meter to maintain a pressure within the liquid reservoir 12 (e.g., an equilibrium with a pressure inside the steam generator 14 and/or an atmospheric pressure). The liquid reservoir 12 may include a liquid level sensor (not shown) for determining a level of liquid in the liquid reservoir 12. A fill pump 20 may be located along the first fluid line 16 and controls liquid exiting the liquid reservoir 12 and entering the steam generator 14. The liquid reservoir 12 also fluidically connects to the steam generator 14 via a second fluid line 22. A drainage pump 24 may be located along the second fluid line 22 and controls liquid exiting the steam generator 14 and entering the liquid reservoir 12. A third flow line 26 extends from the steam generator 14 to a steam output 28 into a heating cavity, where food is cooked. It should be appreciated that, in some embodiments, the fill pump 20 and the drainage pump 24 may be connected to a single fluid line. It should also be appreciated that, in some embodiments, the fill pump 20 and the drainage pump 24 may be the same component (e.g., a reversible pump). In some embodiments, the steam generation system 10 may include a control system 100 (FIG. 3) for performing the methods as described herein.

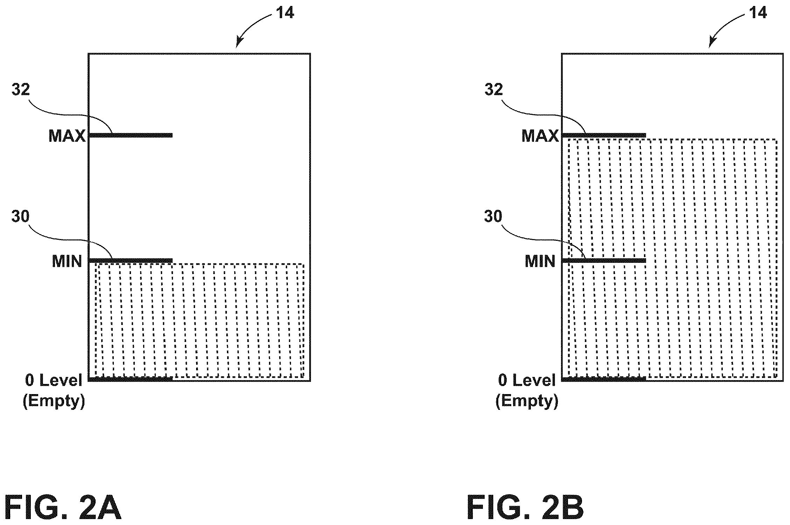

With reference now to FIGS. 2A and 2B, the steam generator 14 may include one or more sensors (e.g., two or more sensors, three or more sensors). In some embodiments, the one or more sensors includes a first fluid level sensor 30 associated with a minimum ("MIN") operational level and a second fluid level sensor 32 associated with a maximum ("MAX") operational level. The level sensors 30, 32 are visible or otherwise generate (e.g., via the control system 100) a notification to a user of the fluid level. Accordingly, the user may obtain knowledge from the level sensors 30, 32 that the steam generator 14 is either at MIN or MAX. During a cooking cycle, liquid is introduced to the steam generator 14 and maintained between the MAX and MIN levels where it is heated, partially becoming steam that exits the steam output 28. When the cooking cycle is complete, the drainage pump 24 substantially empties ("0 level") the steam generator 14 and liquid from related components of the steam generation system 10 (e.g., the first fluid line 16 and the second fluid line 22), and reintroduces substantially all the liquid from the steam generation system 10 back into the liquid reservoir 12. In other words, at empty or 0 level, while certain components of the steam generation system may be slightly coated in liquid, substantially all the liquid has been removed by operation of the drainage pump 24. The fill pump 20 provides a fill flow rate $FR_{fp}$, the drainage pump 24 provides a drainage flow rate $FR_{dp}$, and the steam generator 14 provides a steam flow rate $FR_{boiler}$.

FIG. 3 schematically illustrates the control system 100. The control system 100 may include an electronic control unit (ECU) 102. The ECU 102 may include a processor 104 and a memory 106. The processor 104 may include any suitable processor 104. Additionally, or alternatively, the ECU 102 may include any suitable number of processors, in addition to or other than the processor 104. The memory 106 may comprise a single disk or a plurality of disks (e.g., hard drives) and includes a storage management module that manages one or more partitions within the memory 106. In some embodiments, memory 106 may include flash memory, semiconductor (solid-state) memory, or the like. The memory 106 may include Random Access Memory (RAM), a Read-Only Memory (ROM), Electrically Erasable Programmable Read-Only Memory (EEPROM), or a combination thereof. The memory 106 may include instructions that, when executed by the processor 104, cause the processor 104 to, at least, perform the functions associated with the components of the control system 100. The fill pump 20, the drainage pump 24, and an alarm 34 (e.g., a user interface on a cooking appliance, a light on a cooking appliance, a connected mobile computing device, and/or the like) may, therefore, be controlled and/or receive instructions from the ECU 102. The memory 106 may, therefore, include software 108, obtained flow rates 110 (i.e., the fill flow rate $FR_{fp}$, the drainage flow rate $FR_{dp}$, and the steam flow rate $FR_{boiler}$), volume data 112 (i.e., a volume capability of the liquid reservoir 12, an aggregate of more than one liquid reservoir 12, a volume between MAX and MIN levels of the steam generator 14), parameter data 114 (i.e., a set number of steam cycles before completing any of the below method steps, supply voltage, supply frequency), and user preference data 116 (e.g., a selected steam cycle setting). The control system 100 may be configured to perform the method steps as described herein.

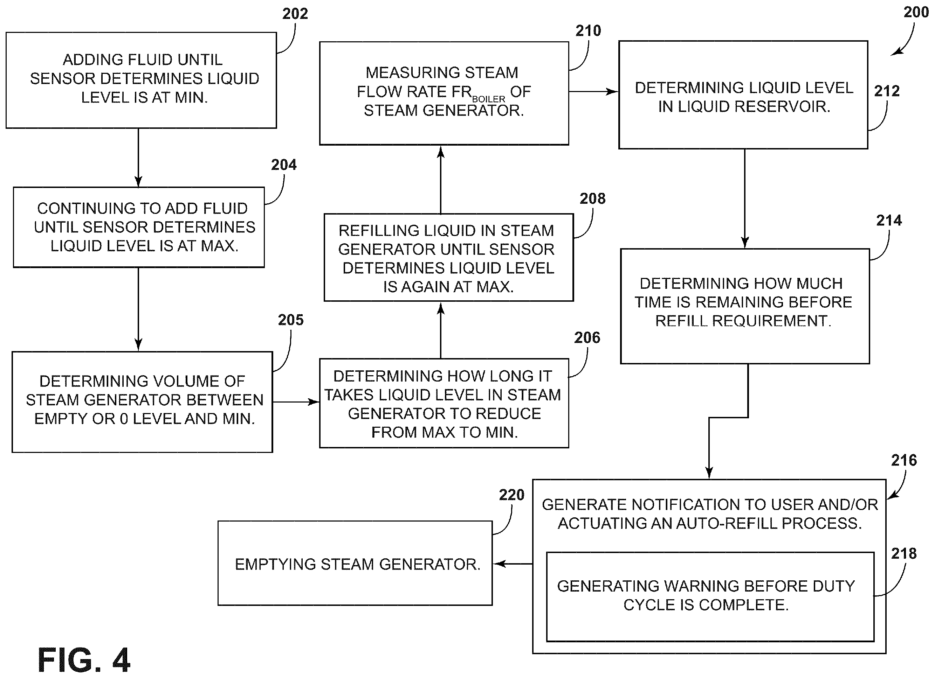

With reference now to FIG. 4, the steam generation system 10 includes a liquid estimation method 200. The liquid estimation method 200 improves upon the traditional methods by calculating the liquid level at or between each steam cycle or a predetermined number of steam cycles (e.g., after zero steam cycles, after each steam cycle, every five steam cycles, every ten steam cycles, and/or the like) to determine a liquid usage rate and estimate when the liquid reservoir 12 (or more than one liquid reservoir 12) will need to be filled. The liquid estimation method 200 also can be utilized to determine an amount of liquid within the steam generator 14 and the drainage flow rate $FR_{dp}$ to minimize dry cycle duration of the drainage pump 24 once the steam generation system 10 has completed the steam cycle. The liquid estimation method 200 includes several steps that occur at the beginning of a steam cycle and additional steps that occur during the steam cycle. Each of these steps may occur (e.g., via parameter data 114), after an equal predetermined number of steam cycles, or after different predetermined numbers of steam cycles, which are generically referred to as a first, second, third, or fourth predetermined number of steam cycles. These different steam cycles may also be generally referred to as a present steam cycle, a subsequent steam cycle that occurs after the present steam cycle, and an additional steam cycle (i.e., an additionally requested steam cycle) that occurs after the subsequent steam cycle. In other words, some steps may occur during each steam cycle and other steps may occur after more than one steam cycle (e.g., two, three, or more steam cycles). In some embodiments, the liquid estimation method 200 may be facilitated by the control system 100.

The liquid estimation method 200 may be reoccurring such that a first drainage flow rate $FR_{dp}$ can be obtained for a present steam cycle and, after a second predetermined number of cycles, a second drainage flow rate $FR_{dp}$ can be obtained for a subsequent steam cycle that is different than the first drainage flow rate $FR_{dp}$. Similarly, a first fill flow rate $FR_{fp}$ can be obtained for a present steam cycle and, after a second predetermined number of cycles, a second fill flow rate $FR_{fp}$ can be obtained for a subsequent steam cycle that is different than the first fill flow rate $FR_{fp}$. Likewise, a first steam flow rate $FR_{boiler}$ can be obtained for a present steam cycle and, after a second predetermined number of cycles, a second steam flow rate $FR_{boiler}$ can be obtained for a subsequent steam cycle that is different than the first steam flow rate $FR_{boiler}$. These differences in flow rates may be the result of environmental conditions and/or aging components of the steam generation system 10. It should also be appreciated that a length of time (e.g., a week, a month, a year) may be used alternatively or in conjunction with the predetermined number of steam cycles.

With reference specifically to FIG. 4, steps 202 - 208 generally occur at the beginning of a steam cycle. At step 202, the liquid estimation method 200 includes, before each or a predetermined number of steam cycles, adding fluid to the steam generator 14 with the fill pump 20 until the first liquid level sensor 30 determines that the liquid is at MIN. For example, the processor 104 may be configured to actuate the fill pump 20 until the liquid level reaches MIN and timing the operation. At step 204, the liquid estimation method 200 includes continuing to add fluid with the fill pump 20 until the second liquid level sensor 32 determines that the liquid level is at MAX. For example, the processor 104 may be configured to further actuate the fill pump 20 until the liquid level reaches MAX while timing the operation. During steps 202 and 204, only the fill pump 20 is actuated to move liquid from the at least one liquid reservoir 12 to the steam generator 14. For example, step 204 may be completed (e.g., by the processor 104) in accordance with Eq. (1) below:

$$FR_{fp} = (Volume_{max} - Volume_{min}) / (t_{max} - t_{min}) \text{ [ml/sec]} \qquad (1)$$

wherein, $t_{min}$ is equal to zero and $t_{max}$ is equal to the time in seconds to obtain the fluid level MAX, starting from fluid level MIN, with input only from the fill pump 20 and the volume of liquid between $Volume_{max}$ and $Volume_{min}$ is known (e.g., in ml). Thus, the fill flow rate $FR_{fp}$, at any time of the operational life of the cooking appliance, can be determined. At step 205, the liquid estimation method 200 may include determining a liquid quantity in the steam generation system 10 between empty or 0 level and MIN in the steam generator 14 based on the time (which may be obtained from step 202) it takes the first fluid level sensor 30 to read MIN from empty and multiplying that time by the fill flow rate $FR_{fp}$ (which may be obtained from step 204) to estimate a volume between MIN and 0 level (e.g., liquid remaining in the first fluid line 16, the second fluid line 22, the steam generator 14, and other components of the steam generation system 10). For example, the processor 104 may be configured to actuate the fill pump 20 until the liquid level reaches MIN from 0 level while timing the operation.

At step 206, the liquid estimation method 200 includes measuring the drainage flow rate $FR_{dp}$ of the drainage pump 24. As explained in the background section, the drainage flow rate $FR_{dp}$ may change over time based on any number of environmental or operational factors. By periodically measuring the drainage flow rate $FR_{dp}$, dry cycle duration of the pump can be minimized. Step 206 includes actuating the drainage pump 24 and determining how long it takes the liquid level in the steam generator 14 to reduce from MAX to MIN (e.g., via the first liquid level sensor 30). For example, the processor 104 may be configured to actuate the drainage pump 24 until the liquid level reaches MIN while timing the operation. During step 206, only the drainage pump 24 is actuated to move liquid from the steam generator 14 to the at least one liquid reservoir 12. For example, step 206 may be completed in accordance with Eq. (2) below:

$$FR_{dp} = (Volume_{max} - Volume_{min}) / (t_{max} - t_{min}) \; [ml/sec] \quad (2)$$

where $t_{min}$ is equal to zero and $t_{max}$ is equal to the time in seconds to obtain the fluid level MIN from fluid level MAX with input only from the drainage pump 24 and the volume of liquid between $Volume_{max}$ and $Volume_{min}$ is known (e.g., in ml). Thus, the drainage flow rate $FR_{dp}$ at any time of the operational life of the cooking appliance can be determined. As such, because 0 level is not a measurable quantity, the differences between 0 level and MIN or MAX can be estimated to limit dry cycle duration in conjunction with the drainage flow rate $FR_{dp}$ at any time of the operational life. At step 208, the liquid estimation method 200 includes refilling the liquid in the steam generator 14 until the second liquid level sensor 32 determines the liquid level is again at MAX. For example, the processor 104 may be configured to actuate the fill pump 20 until the liquid level reaches MAX.

With continued reference to FIG. 4, steps 210 - 214 generally occur during the steam cycle. At step 210, the liquid estimation method 200 includes, during a steam cycle, measuring the steam flow rate $FR_{boiler}$ of the steam generator 14 by measuring how long it takes the liquid level in the steam generator 14 to reduce from MAX to MIN (e.g., with the first and second fluid level sensors 30, 32) without input from the fill pump 20 or the drainage pump 24. For example, the processor 104 may be configured to actuate the steam generator 14 until the liquid level reaches MIN and timing the operation. The steam flow rate $FR_{boiler}$ of the steam generator 14 is the rate at which liquid is heated into steam and dissipated into the heating cavity. For example, step 210 may be completed in accordance with Eq. (3) below:

$$FR_{boiler} = (Volume_{max} - Volume_{min}) / (t_{boiler}) \; [ml/sec] \quad (3)$$

where $t_{boiler}$ is equal to the time in seconds the steam generator 14 is actuated to obtain the fluid level MIN with input only from the steam generator 14 and the volume of liquid between $Volume_{max}$ and $Volume_{min}$ is known (e.g., in ml). Thus, the steam flow rate $FR_{boiler}$ at any time of the operational life of the cooking appliance can be determined.

Based on steps 202 - 210, the liquid estimation method 200 includes, at step 212, determining a liquid level in the one or more liquid reservoirs 12. Step 212 includes referencing a known starting amount in the one or more liquid reservoirs 12 before the steam cycle, for example, when the one or more liquid reservoirs 12 are full (the $Water_{reservoir}(t0)$) and subtracting the steam flow rate $FR_{boiler}$ multiplied by the time (in seconds) that the steam generator 14 was running. The processor 104 may be configured to subtract the steam flow rate $FR_{boiler}$ multiplied by the time (in seconds) that the steam generator 14 was running from a known liquid quantity in the one or more liquid reservoirs 12. For example, step 212 may be completed in accordance with Eq. (4) below:

$$Water_{reservoir}(t_{END}) = Water_{reservoir}(t0) - (Water_{boiler}t\_current + t_{ON} * FR_{boiler}) \; [ml] \quad (4)$$

where $Water_{reservoir}$ at $(t_{END})$ is equal to the liquid quantity in the one or more liquid reservoirs 12. $Water_{reservoir}$ at $(t_{END})$ will change based on known quantities obtained from the previous steps, for example, after the steam generator 14 is on and the steam flow rate $FR_{boiler}$ continues for a number of seconds $(t_{ON})$. $Water_{boiler}t\_current$ is an estimated quantity of liquid in the steam generator 14, which may be determined based on a total quantity of liquid reduction based on the steam flow rate $FR_{boiler}$ from MAX, a liquid increase based on the fill flow rate $FR_{fp}$ from MIN, or by being at either MIN or MAX via the level sensors 30, 32. Step 212, may, alternatively, include measuring an ending quantity of liquid in the one or more liquid reservoirs 12, once all the liquid in the steam generation system 10 is returned to the one or more liquid reservoirs 12. The alternative estimation would follow Eq. (4) above, but would not include Water$_{boiler}$t_current as part of the calculation.

Based on steps 202 - 212, the time at which the one or more liquid reservoirs 12 needs to be refilled can be determined at step 214. At step 214, the liquid estimation method 200 includes determining (e.g., the processor 104 may be configured to determine) how much time is remaining before refill requirements by dividing the amount of liquid in the one or more liquid reservoirs 12 (e.g., based on step 212) by the steam flow rate FR$_{boiler}$ (step 210), if the steam flow rate FR$_{boiler}$ for a selected steam cycle is constant, multiplied by how much longer the steam cycle has to run within a steam cycle. In other embodiments, the steam flow rate FR$_{boiler}$ for a selected steam cycle may not be constant (e.g., one or more rates) and the steam flow rate FR$_{boiler}$ can be averaged or otherwise determined based on the time (t) that each steam flow rate FR$_{boiler}$ is occurring in the selected steam cycle. Regardless, the resulting number may then be multiplied by 1/60 to provide a time in minutes before the one or more liquid reservoirs 12 needs to be refilled. For example, step 214 may be completed in accordance with Eq. (5) below:

$$T_{remaining} = (Water_{system}t\_current / (FR_{boiler} * duty_{boiler}\%)) * 1/60 \, [min] \quad (5)$$

where the time in minutes before the one or more liquid reservoirs 12 needs to be refilled (T$_{remaining}$) is determined by multiplying the steam flow rate FR$_{boiler}$ (step 210) by the remaining steam cycle requirement (duty$_{boiler}$%). This resulting number may then be multiplied by 1/60 to provide T$_{remaining}$. The Water$_{system}$t_current is equal to the liquid level currently in the one or more liquid reservoirs 12 and the Water$_{boiler}$t_current is equal to liquid level currently in the steam generator, both obtained in step 212 and/or Eq. 4.

With continued reference to FIG. 4, steps 216 and 218 generally occur during the steam cycle and step 220 generally occurs after the steam cycle. At step 216, if the one or more liquid reservoirs 12 need to be refilled, then the alarm 34 may generate a notification (e.g., the processor 104 may be configured to generate the notification) to the user, a service/maintenance provider, and/or actuating an auto-refill process (e.g., by the processor 104) where the auto-refill process is stopped upon completion (e.g., when the one or more liquid reservoirs 12 are full). Based on how much longer the steam cycle has to run and the T$_{remaining}$, step 216 may further include, at step 218, generating a warning (e.g., requesting manual refill or request approval to begin auto-refilling) or automatically (e.g., without user approval) starting the auto-refill process before the duty cycle is complete. For example, the processor 104 may be configured to generate the warning or automatically refill the steam generation system 10.

At step 220, the liquid estimation method 200 may include (e.g., the processor may be configured to), after a steam cycle, emptying the steam generator 14. Step 220 includes actuating the drainage pump 24 and, after a MIN fluid level is reached, multiplying the drainage flow rate FR$_{dp}$ by a time until the volume between MIN and empty (e.g., as obtained in step 205) is reached.

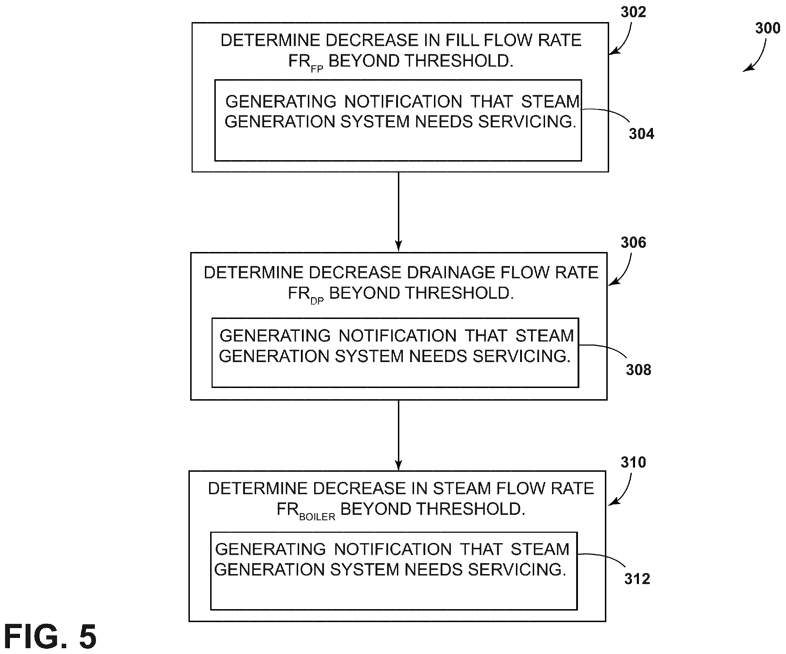

With reference now to FIG. 5, the present invention may utilize data obtained from liquid estimation method 200 to make certain recommendations in a system management method 300. For example, the system management method 300 may include (e.g., the processor may be configured to), at step 302, determining a difference (e.g., lower or higher) in fill flow rate FR$_{fp}$ beyond a threshold (e.g., in association with sequentially repeating steps 202-204 to obtain a first fill flow rate FR$_{fp}$ and a second fill flow rate FR$_{fp}$). At step 304, the system management method 300 may include (e.g., the processor may be configured to) generating a notification, to a user and/or a service/maintenance provider, that the steam generation system needs servicing (e.g., maintenance, descaling, etc.). For example, the fill pump specifically needs to be replaced because of a loss of efficiency. The system management method 300 may include (e.g., the processor may be configured to), at step 306, determining a difference (e.g., lower or higher) in drainage flow rate FR$_{dp}$ beyond the threshold (e.g., in association with sequentially repeating step 206 to obtain a first drainage flow rate FR$_{dp}$ and a second drainage flow rate FR$_{dp}$). At step 308, the system management method 300 may include (e.g., the processor may be configured to) generating a notification, to a user and/or a service/maintenance provider, that the steam generation system needs servicing (e.g., maintenance, descaling, etc.). For example, the drainage pump specifically needs to be replaced because of a loss of efficiency. The system management method 300 may (e.g., the processor may be configured to), at step 310, determine a difference (e.g., lower or higher) in steam flow rate FR$_{boiler}$ beyond the threshold (e.g., in association with sequentially repeating step 210 to obtain a first steam flow rate FR$_{boiler}$ and a second steam flow rate FR$_{boiler}$). At step 312, the system management method 300 may (e.g., the processor may be configured to) generate a notification, to a user and/or a service/maintenance provider, that the steam generation system needs servicing (e.g., maintenance, descaling, etc.). For example, the steam generator specifically needs to be replaced because of a loss of efficiency.

The invention disclosed herein is further summarized in the following paragraphs and is further characterized by combinations of any and all of the various aspects described therein.

According to one aspect of the present invention, a method of estimating fluid in a steam generation system includes determining a first steam flow rate of a steam generator. During a present steam cycle, determine a quantity of liquid remaining in the one or more liquid reservoirs by determining a time the steam generator injected steam and multiplying the time by the first steam flow rate. Based on the first steam flow rate, determine a time remaining before the quantity of liquid remaining in the one or more liquid reservoirs is below a threshold and the one or more liquid reservoirs needs to be refilled.

According to another aspect, a method includes, before a present steam cycle, determining a starting quantity of liquid in one or more liquid reservoirs.

According to another aspect, a method includes obtaining a usage requirement by multiplying a first steam flow rate by at least one of a remaining steam cycle requirement of a present steam cycle or a subsequent steam cycle requirement of a subsequent steam cycle. Comparing a usage requirement with a quantity of liquid remaining in one or more liquid reservoirs.

According to still another aspect, a method includes, after a present steam cycle, determining a second steam flow rate of a steam generator.

According to another aspect, a first steam flow rate is different than a second steam flow rate.

According to yet another aspect, a method includes, during a subsequent steam cycle, determining a time remaining before a quantity of liquid remaining in one or more liquid reservoirs is below a threshold and the one or more liquid reservoirs needs to be refilled based on a second steam flow rate.

According to still another aspect, a method includes comparing a first steam flow rate to a second steam flow rate and upon a determination that the second steam flow rate is different (e.g., lower or higher) than the first steam flow rate by a threshold amount, generating a notification.

According to another aspect, the notification specifically addresses a steam generator efficiency.

According to yet another aspect, the one or more fluid reservoirs includes at least two fluid reservoirs.

According to still another aspect, a method includes filling a steam generator with a quantity of liquid past a minimum level obtained by a first sensor to a maximum level obtained by a second sensor. Running the steam generator at a first steam flow rate until a quantity of liquid in the steam generator returns to the minimum level. Dividing a volume between the minimum level and the maximum level by a time the steam generator was running.

According to another aspect of the present invention, a method of estimating fluid in a steam generation system includes determining a first steam flow rate of a steam generator for a present steam cycle. After the present steam cycle, fill the steam generator with a quantity of liquid past a minimum level obtained by a first sensor to a maximum level obtained by a second sensor. Run the steam generator until the quantity of liquid in the steam generator returns to the minimum level. Divide a volume between the minimum level and the maximum level by the time the steam generator was running to determine a second steam flow rate.

According to still another aspect, a method includes, before a subsequent steam cycle, obtaining a starting quantity of liquid in one or more liquid reservoirs. During the subsequent steam cycle, determining a quantity of liquid remaining in one or more liquid reservoirs by determining a time a steam generator injected steam and multiplying the time by a second steam flow rate.

According to yet another aspect, a method includes, based on a second steam flow rate, determining a time remaining before a quantity of liquid remaining in one or more liquid reservoirs is below a threshold and one or more liquid reservoirs needs to be refilled.

According to still another aspect, a method includes, after the subsequent steam cycle, generating a notification if an additionally requested steam cycle will not be completed prior to when one or more liquid reservoirs need to be refilled.

According to yet another aspect, a first steam flow rate is different than a second steam flow rate.

According to another aspect, a method of estimating fluid in a steam generation system includes, before a first steam cycle, determining a first drainage flow rate of a drainage pump by measuring a time to reduce a liquid level in a steam generator from a maximum level to a minimum level with input only from the drainage pump. After the first steam cycle, actuate the drainage pump until the liquid level in the steam generator is equal to the minimum level.

According to yet another aspect, a method includes continuing to actuate the drainage pump for a period of time until the liquid level is empty wherein substantially all of the liquid in the steam generation system is located in one or more liquid reservoirs based on the first drainage flow rate.

According to yet another aspect, a method includes, after a first steam cycle but before a second steam cycle, determining a second drainage flow rate of a drainage pump by measuring a second time to reduce a liquid level in a steam generator from a maximum level to a minimum level with input only from the drainage pump. After a second steam cycle, actuating the drainage pump until the liquid level in the steam generator is equal to the minimum level.

According to yet another aspect, a method includes continuing to actuate the drainage pump for a second period of time until the liquid level is empty based on the second drainage flow rate and where the first drainage flow rate is different than a second drainage flow rate.

According to still another aspect, a method includes comparing a first drainage flow rate and a second drainage flow rate. Upon a determination that the second drainage flow rate is different (e.g., lower or higher) than the first drainage flow rate by a threshold amount, generating a notification.

According to yet another aspect, the notification specifically addresses a drainage pump efficiency.

According to still another aspect, a method incudes, with a fill pump, filling a liquid level in a steam generator to a maximum level, turning the fill pump off, and, with a drainage pump, reducing the liquid level in the steam generator to a minimum level.

According to yet another aspect, a method includes determining a fill flow rate of a fill pump by determining a time to fill a steam generator between a minimum level and a maximum level and dividing a volume between the minimum level and the maximum level by the time. Starting at empty, filling the steam generator for a period of time to reach the minimum level with input only from the fill pump and multiplying the period of time by the fill flow rate to obtain a volume between the minimum level and empty.

According to yet another aspect, a method includes, before the first steam cycle, determining a first fill flow rate of the fill pump by determining a time to fill the steam generator between the minimum level and the maximum level and dividing a volume between the minimum level and the maximum level by the time. Before a second steam cycle, determining a second fill flow rate of the fill pump by determining a time to fill the steam generator between the minimum level and the maximum level and dividing a volume between the minimum level and the maximum level by the time. The method further includes comparing the first fill flow rate and the second fill flow rate and upon a determination that the second fill flow rate is different than the first fill flow rate by a threshold amount, generating a notification.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this invention, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention as shown in the exemplary embodiments is illustrative only. Although only a few embodiments of the present innovations have been described in detail in this invention, those skilled in the art who review this invention will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

It will be understood that any described processes or steps within described processes may be combined with other disclosed processes or steps to form structures within the scope of the present invention as defined by the appended claims. The exemplary structures and processes disclosed herein are for illustrative purposes and are not to be construed as limiting.

## Claims

**1.** An estimation method for a steam generation system (10), in particular for a steam generation system (10) of a cooking appliance, the steam generation system (10) including:

 i) one or more liquid reservoirs (12),
 ii) a steam generator (14) fluidically connected to the one or more liquid reservoirs (12) via a first liquid line (16) and via a second liquid line (22) and configured for converting liquid from the one or more liquid reservoirs (12) into steam in particular during a steam cycle,
 iii) a first fluid level sensor (30) associated with a minimum level (MIN) of liquid in the steam generator (14),
 iv) a second fluid level sensor (32) associated with a maximum level (MAX) of liquid in the steam generator (14),
 v) a fill pump (20) located along the first liquid line (16) and configured for controlling liquid exiting the one or more liquid reservoirs (12) and entering the steam generator (14),
 vi) a drainage pump (24) located along the second liquid line (22) and configured for controlling liquid exiting the steam generator (14) and entering the one or more liquid reservoirs (12), and

vii) a steam output (28) fluidically connected to the steam generator (14) via a steam line (26),

wherein the estimation method is **characterized in that** it comprises the step of estimating a flow rate of at least one of the fill pump (20) and the drainage pump (24) of the steam generation system (10),
the estimation method also comprising the following steps:

- obtaining a first fill flow rate ($FR_{fp}$) of said fill pump (20) and/or a first drainage flow rate ($FR_{dp}$) of said drainage pump (24),
- obtaining, after a predetermined number of steam cycles and/or a length of time, a second fill flow rate ($FR_{fp}$) of the fill pump (20) and/or a second drainage flow rate ($FR_{dp}$) of the drainage pump (24),
- determining a difference in the fill flow rate ($FR_{fp}$) and/or in the drainage flow rate ($FR_{dp}$) beyond a threshold,
- generating a notification to a user and/or a service/maintenance provider that the steam generation system needs servicing.

2. The estimation method of claim 1, comprising the steps of:

filling the steam generator (14) with a quantity of liquid past a minimum level (MIN) obtained by the first fluid level sensor (30) to a maximum level (MAX) obtained by the second fluid level sensor (32);
running the steam generator (14) until the quantity of liquid in the steam generator (14) returns to the minimum level (MIN); and
dividing a volume between the minimum level (MIN) and the maximum level (MAX) by the time the steam generator (14) was running to determine a flow rate ($FR_{boiler}$) of the steam generator (14).

3. The estimation method of claim 2, further comprising, in a subsequent steam cycle, the steps of:

obtaining a starting quantity of liquid in the one or more liquid reservoirs (12);
determining an injection time in which steam is injected by the steam generator (14) and/or by the steam outlet (28);
determining a quantity of liquid remaining in the one or more liquid reservoirs (12) by multiplying the injection time by the flow rate ($FR_{boiler}$) of the steam generator (14); and
determining a time remaining before the quantity of liquid remaining in the one or more liquid reservoirs (12) is below a threshold and/or before the one or more liquid reservoirs (12) need to be refilled.

4. The estimation method of claim 2 or 3, further comprising the following steps:

- obtaining a first steam flow rate ($FR_{boiler}$) of the steam generator (14)
- obtaining, after a predetermined number of steam cycles, a second steam flow rate ($FR_{boiler}$) of the steam generator (14),
- determining a difference in the steam flow rate ($FR_{boiler}$) beyond a threshold,
- generating a notification to a user and/or a service/maintenance provider that the steam generation system needs servicing.

5. The estimation method of anyone of claim 2 - 4, wherein the flow rate ($FR_{fp}$) of the fill pump (20) is obtained by:

- determining a time to fill the steam generator (14) between the minimum level (MIN) and the maximum level (MAX), with input only from the fill pump (20) and by keeping both the drainage pump (24) and a boiler of the steam generator (14) switched off, and
- dividing a volume between the minimum level (MIN) and the maximum level (MAX) by the time to fill the steam generator (14).

6. The estimation method of anyone of claims 2 - 5, wherein the flow rate ($FR_{dp}$) of the drainage pump (24) is obtained by:

- determining a time to reduce a liquid level in the steam generator (14) from the maximum level (MAX) to the minimum level (MIN), with input only from the drainage pump (24) and by keeping both the fill pump (20) and a boiler of the steam generation system (10) switched off, and
- dividing a volume between the minimum level (MIN) and the maximum level (MAX) by the time to reduce the liquid level in the steam generator (14).

7. A steam generation system (10) of a cooking appliance, the steam generation system (10) including:

> i) one or more liquid reservoirs (12),
> ii) a steam generator (14) fluidically connected to the one or more liquid reservoirs (12) via a first liquid line (16) and via a second liquid line (22) and configured for converting liquid from the one or more liquid reservoirs (12) into steam in particular during a steam cycle,
> iii) a first fluid level sensor (30) associated with a minimum level (MIN) of liquid in the steam generator (14),
> iv) a second fluid level sensor (32) associated with a maximum level (MAX) of liquid in the steam generator (14),
> v) a fill pump (20) located along the first liquid line (16) and configured for controlling liquid exiting the one or more liquid reservoirs (12) and entering the steam generator (14),
> vi) a drainage pump (24) located along the second liquid line (22) and configured for controlling liquid exiting the steam generator (14) and entering the one or more liquid reservoirs (12), and
> vii) a steam output (28) fluidically connected to the steam generator (14) via a steam line (26), and
> viii) a control system (100) configured to perform the following method steps according to any one of claims 1-6:
>
>> - estimating a flow rate of at least one of the fill pump (20) and the drainage pump (24) of the steam generation system (10),
>> - obtaining a first fill flow rate ($FR_{fp}$) of said fill pump (20) and/or a first drainage flow rate ($FR_{dp}$) of said drainage pump (24),
>> - obtaining, after a predetermined number of steam cycles and/or a length of time, a second fill flow rate ($FR_{fp}$) of the fill pump (20) and/or a second drainage flow rate ($FR_{dp}$) of the drainage pump (24),
>> - determining a difference in the fill flow rate ($FR_{fp}$) and/or in the drainage flow rate ($FR_{dp}$) beyond a threshold,
>> - generating a notification to a user and/or a service/maintenance provider that the steam generation system needs servicing.

**Patentansprüche**

1. Ein Schätzverfahren für ein Dampferzeugungssystem (10), insbesondere für ein Dampferzeugungssystem (10) eines Kochgeräts, wobei das Dampferzeugungssystem (10) umfasst:

> i) einen oder mehrere Flüssigkeitsbehälter (12),
> ii) einen Dampferzeuger (14), der über eine erste Flüssigkeitsleitung (16) und über eine zweite Flüssigkeitsleitung (22) fluidisch mit dem einen oder den mehreren Flüssigkeitsbehältern (12) verbunden und konfiguriert ist, um Flüssigkeit aus dem einen oder den mehreren Flüssigkeitsbehältern (12) insbesondere während eines Dampfzyklus in Dampf umzuwandeln,
> iii) einen ersten Füllstandssensor (30), der einem Mindestfüllstand (MIN) von Flüssigkeit im Dampferzeuger (14) zugeordnet ist,
> iv) einen zweiten Füllstandssensor (32), der einem Höchstfüllstand (MAX) von Flüssigkeit im Dampferzeuger (14) zugeordnet ist,
> v) eine Füllpumpe (20), die entlang der ersten Flüssigkeitsleitung (16) angeordnet und konfiguriert ist, um Flüssigkeit, die aus dem einen oder den mehreren Flüssigkeitsbehältern (12) austritt und in den Dampferzeuger (14) eintritt, zu steuern,
> vi) eine Entleerungspumpe (24), die entlang der zweiten Flüssigkeitsleitung (22) angeordnet und konfiguriert ist, um Flüssigkeit, die aus dem Dampferzeuger (14) austritt und in den einen oder die mehreren Flüssigkeitsbehälter (12) eintritt, zu steuern, und
> vii) einen Dampfauslass (28), der über eine Dampfleitung (26) fluidisch mit dem Dampferzeuger (14) verbunden ist,

wobei das Schätzverfahren **dadurch gekennzeichnet ist, dass** es den Schritt des Schätzens eines Durchflusses von mindestens einer der Füllpumpe (20) und der Entleerungspumpe (24) des Dampferzeugungssystems (10) umfasst,
wobei das Schätzverfahren auch die folgenden Schritte umfasst:

> - Erhalten eines ersten Füllpumpendurchflusses ($FR_{fp}$) der besagten Füllpumpe (20) und/oder eines ersten Entleerungspumpendurchflusses ($FR_{dp}$) der besagten Entleerungspumpe (24),
> - Erhalten, nach einer vorbestimmten Anzahl von Dampfzyklen und/oder einer Zeitspanne, eines zweiten Füllpumpendurchflusses ($FR_{fp}$) der Füllpumpe (20) und/oder eines zweiten Entleerungspumpendurchflusses (FR$_{dp}$) der Entleerungspumpe (24),
- Bestimmen einer Differenz im Füllpumpendurchfluss (FR$_{fp}$) und/oder im Entleerungspumpendurchfluss (FR$_{dp}$) über einen Schwellenwert hinaus,
- Erzeugen einer Benachrichtigung an einen Benutzer und/oder einen Service-/Wartungsdienstleister, dass das Dampferzeugungssystem gewartet werden muss.

2. Das Schätzverfahren nach Anspruch 1, umfassend die Schritte:

Füllen des Dampferzeugers (14) mit einer Menge Flüssigkeit über einen durch den ersten Füllstandssensor (30) erhaltenen Mindestfüllstand (MIN) hinaus bis zu einem durch den zweiten Füllstandssensor (32) erhaltenen Höchstfüllstand (MAX);
Betreiben des Dampferzeugers (14), bis die Menge Flüssigkeit im Dampferzeuger (14) auf den Mindestfüllstand (MIN) zurückkehrt; und
Teilen eines Volumens zwischen dem Mindestfüllstand (MIN) und dem Höchstfüllstand (MAX) durch die Zeit, die der Dampferzeuger (14) in Betrieb war, um einen Durchfluss (FR$_{boiler}$) des Dampferzeugers (14) zu bestimmen.

3. Das Schätzverfahren nach Anspruch 2, ferner umfassend, in einem nachfolgenden Dampfzyklus, die Schritte:

Erhalten einer Startmenge Flüssigkeit in dem einen oder den mehreren Flüssigkeitsbehältern (12);
Bestimmen einer Injektionszeit, in der Dampf durch den Dampferzeuger (14) und/oder durch den Dampfauslass (28) injiziert wird;
Bestimmen einer im einen oder den mehreren Flüssigkeitsbehältern (12) verbleibenden Menge Flüssigkeit durch Multiplizieren der Injektionszeit mit dem Durchfluss (FR$_{boiler}$) des Dampferzeugers (14); und
Bestimmen einer verbleibenden Zeit, bevor die im einen oder den mehreren Flüssigkeitsbehältern (12) verbleibende Menge Flüssigkeit unter einen Schwellenwert fällt und/oder bevor der eine oder die mehreren Flüssigkeitsbehälter (12) nachgefüllt werden müssen.

4. Das Schätzverfahren nach Anspruch 2 oder 3, ferner umfassend die folgenden Schritte:

- Erhalten eines ersten Dampfdurchflusses (FR$_{boiler}$) des Dampferzeugers (14)
- Erhalten, nach einer vorbestimmten Anzahl von Dampfzyklen, eines zweiten Dampfdurchflusses (FR$_{boiler}$) des Dampferzeugers (14),
- Bestimmen einer Differenz im Dampfdurchfluss (FR$_{boiler}$) über einen Schwellenwert hinaus,
- Erzeugen einer Benachrichtigung an einen Benutzer und/oder einen Service-/Wartungsdienstleister, dass das Dampferzeugungssystem gewartet werden muss.

5. Das Schätzverfahren nach einem der Ansprüche 2 - 4, wobei der Durchfluss (FR$_{fp}$) der Füllpumpe (20) erhalten wird durch:

- Bestimmen einer Zeit zum Füllen des Dampferzeugers (14) zwischen dem Mindestfüllstand (MIN) und dem Höchstfüllstand (MAX), wobei nur die Füllpumpe (20) eingeschaltet ist und sowohl die Entleerungspumpe (24) als auch ein Kessel des Dampferzeugers (14) ausgeschaltet gehalten werden, und
- Teilen eines Volumens zwischen dem Mindestfüllstand (MIN) und dem Höchstfüllstand (MAX) durch die Zeit zum Füllen des Dampferzeugers (14).

6. Das Schätzverfahren nach einem der Ansprüche 2 - 5, wobei der Durchfluss (FR$_{dp}$) der Entleerungspumpe (24) erhalten wird durch:

- Bestimmen einer Zeit zum Absenken eines Flüssigkeitsstands im Dampferzeuger (14) vom Höchstfüllstand (MAX) auf den Mindestfüllstand (MIN), wobei nur die Entleerungspumpe (24) eingeschaltet ist und sowohl die Füllpumpe (20) als auch ein Kessel des Dampferzeugungssystems (10) ausgeschaltet gehalten werden, und
- Teilen eines Volumens zwischen dem Mindestfüllstand (MIN) und dem Höchstfüllstand (MAX) durch die Zeit zum Absenken des Flüssigkeitsstands im Dampferzeuger (14).

7. Ein Dampferzeugungssystem (10) eines Kochgeräts, wobei das Dampferzeugungssystem (10) umfasst:

i) einen oder mehrere Flüssigkeitsbehälter (12),
ii) einen Dampferzeuger (14), der über eine erste Flüssigkeitsleitung (16) und über eine zweite Flüssigkeitsleitung (22) fluidisch mit dem einen oder den mehreren Flüssigkeitsbehältern (12) verbunden und konfiguriert ist, um Flüssigkeit aus dem einen oder den mehreren Flüssigkeitsbehältern (12) insbesondere während eines Dampfzyklus in Dampf umzuwandeln,

iii) einen ersten Füllstandssensor (30), der einem Mindestfüllstand (MIN) von Flüssigkeit im Dampferzeuger (14) zugeordnet ist,

iv) einen zweiten Füllstandssensor (32), der einem Höchstfüllstand (MAX) von Flüssigkeit im Dampferzeuger (14) zugeordnet ist,

v) eine Füllpumpe (20), die entlang der ersten Flüssigkeitsleitung (16) angeordnet und konfiguriert ist, um Flüssigkeit, die aus dem einen oder den mehreren Flüssigkeitsbehältern (12) austritt und in den Dampferzeuger (14) eintritt, zu steuern,

vi) eine Entleerungspumpe (24), die entlang der zweiten Flüssigkeitsleitung (22) angeordnet und konfiguriert ist, um Flüssigkeit, die aus dem Dampferzeuger (14) austritt und in den einen oder die mehreren Flüssigkeitsbehälter (12) eintritt, zu steuern, und

vii) einen Dampfauslass (28), der über eine Dampfleitung (26) fluidisch mit dem Dampferzeuger (14) verbunden ist, und

viii) ein Steuerungssystem (100), das konfiguriert ist, um die folgenden Verfahrensschritte gemäß einem der Ansprüche 1-6 durchzuführen:

- Schätzen eines Durchflusses von mindestens einer der Füllpumpe (20) und der Entleerungspumpe (24) des Dampferzeugungssystems (10),
- Erhalten eines ersten Füllpumpendurchflusses ($FR_{fp}$) der besagten Füllpumpe (20) und/oder eines ersten Entleerungspumpendurchflusses ($FR_{dp}$) der besagten Entleerungspumpe (24),
- Erhalten, nach einer vorbestimmten Anzahl von Dampfzyklen und/oder einer Zeitspanne, eines zweiten Füllpumpendurchflusses ($FR_{fp}$) der Füllpumpe (20) und/oder eines zweiten Entleerungspumpendurchflusses ($FR_{dp}$) der Entleerungspumpe (24),
- Bestimmen einer Differenz im Füllpumpendurchfluss ($FR_{fp}$) und/oder im Entleerungspumpendurchfluss ($FR_{dp}$) über einen Schwellenwert hinaus,
- Erzeugen einer Benachrichtigung an einen Benutzer und/oder einen Service-/Wartungsdienstleister, dass das Dampferzeugungssystem gewartet werden muss.

## Revendications

1. Procédé d'estimation pour un système de génération de vapeur (10), en particulier pour un système de génération de vapeur (10) d'un appareil de cuisson, le système de génération de vapeur (10) comprenant :

i) un ou plusieurs réservoirs de liquide (12),

ii) un générateur de vapeur (14) en communication fluidique avec un ou plusieurs desdits réservoirs de liquide (12) via une première conduite de liquide (16) et via une seconde conduite de liquide (22) et configuré pour convertir du liquide provenant d'un ou plusieurs desdits réservoirs de liquide (12) en vapeur, en particulier pendant un cycle de vapeur,

iii) un premier capteur de niveau de fluide (30) associé à un niveau minimum (MIN) de liquide dans le générateur de vapeur (14),

iv) un second capteur de niveau de fluide (32) associé à un niveau maximum (MAX) de liquide dans le générateur de vapeur (14),

v) une pompe de remplissage (20) située le long de la première conduite de liquide (16) et configurée pour contrôler l'écoulement du liquide sortant d'un ou plusieurs desdits réservoirs de liquide (12) et entrant dans le générateur de vapeur (14),

vi) une pompe de drainage (24) située le long de la seconde conduite de liquide (22) et configurée pour contrôler l'écoulement du liquide sortant du générateur de vapeur (14) et entrant dans un ou plusieurs desdits réservoirs de liquide (12), et

vii) une sortie de vapeur (28) en communication fluidique avec le générateur de vapeur (14) via une conduite de vapeur (26),

dans lequel le procédé d'estimation est **caractérisé en ce qu'**il comprend l'étape d'estimation d'un débit d'au moins l'une de la pompe de remplissage (20) et de la pompe de drainage (24) du système de génération de vapeur (10), le procédé d'estimation comprenant également les étapes suivantes :

- obtention d'un premier débit de remplissage ($FR_{fp}$) de ladite pompe de remplissage (20) et/ou d'un premier débit de drainage ($FR_{dp}$) de ladite pompe de drainage (24),
- obtention, après un nombre prédéterminé de cycles de vapeur et/ou une durée, d'un second débit de remplissage ($FR_{fp}$) de la pompe de remplissage (20) et/ou d'un second débit de drainage ($FR_{dp}$) de la pompe de drainage (24),
- détermination d'une différence entre le débit de remplissage ($FR_{fp}$) et/ou entre le débit de drainage ($FR_{dp}$) au-delà d'un seuil,
- génération d'une notification à un utilisateur et/ou à un prestataire de service/maintenance indiquant que le système de génération de vapeur nécessite une maintenance.

2. Procédé d'estimation selon la revendication 1, comprenant les étapes de :

remplissage du générateur de vapeur (14) avec une quantité de liquide au-delà d'un niveau minimum (MIN) obtenu par le premier capteur de niveau de fluide (30) jusqu'à un niveau maximum (MAX) obtenu par le second capteur de niveau de fluide (32) ;
fonctionnement du générateur de vapeur (14) jusqu'à ce que la quantité de liquide dans le générateur de vapeur (14) revienne au niveau minimum (MIN) ; et
division d'un volume entre le niveau minimum (MIN) et le niveau maximum (MAX) par le temps pendant lequel le générateur de vapeur (14) a fonctionné pour déterminer un débit ($FR_{boiler}$) du générateur de vapeur (14).

3. Procédé d'estimation selon la revendication 2, comprenant en outre, dans un cycle de vapeur ultérieur, les étapes de :

obtention d'une quantité de départ de liquide dans un ou plusieurs desdits réservoirs de liquide (12) ;
détermination d'un temps d'injection pendant lequel de la vapeur est injectée par le générateur de vapeur (14) et/ou par la sortie de vapeur (28) ;
détermination d'une quantité de liquide restant dans un ou plusieurs desdits réservoirs de liquide (12) en multipliant le temps d'injection par le débit ($FR_{boiler}$) du générateur de vapeur (14) ; et
détermination d'un temps restant avant que la quantité de liquide restant dans un ou plusieurs desdits réservoirs de liquide (12) ne soit inférieure à un seuil et/ou avant qu'un ou plusieurs desdits réservoirs de liquide (12) ne doivent être remplis à nouveau.

4. Procédé d'estimation selon la revendication 2 ou 3, comprenant en outre les étapes suivantes :

- obtention d'un premier débit de vapeur ($FR_{boiler}$) du générateur de vapeur (14),
- obtention, après un nombre prédéterminé de cycles de vapeur, d'un second débit de vapeur ($FR_{boiler}$) du générateur de vapeur (14),
- détermination d'une différence entre le débit de vapeur ($FR_{boiler}$) au-delà d'un seuil,
- génération d'une notification à un utilisateur et/ou à un prestataire de service/maintenance indiquant que le système de génération de vapeur nécessite une maintenance.

5. Procédé d'estimation selon l'une quelconque des revendications 2 à 4, dans lequel le débit ($FR_{fp}$) de la pompe de remplissage (20) est obtenu par :

- détermination d'un temps pour remplir le générateur de vapeur (14) entre le niveau minimum (MIN) et le niveau maximum (MAX), avec alimentation uniquement par la pompe de remplissage (20) et en maintenant à la fois la pompe de drainage (24) à l'arrêt et une chaudière du générateur de vapeur (14) éteinte, et
- division d'un volume entre le niveau minimum (MIN) et le niveau maximum (MAX) par le temps pour remplir le générateur de vapeur (14).

6. Procédé d'estimation selon l'une quelconque des revendications 2 à 5, dans lequel le débit ($FR_{dp}$) de la pompe de drainage (24) est obtenu par :

- détermination d'un temps pour réduire un niveau de liquide dans le générateur de vapeur (14) du niveau maximum (MAX) au niveau minimum (MIN), avec alimentation uniquement par la pompe de drainage (24) et en maintenant à la fois la pompe de remplissage (20) à l'arrêt et une chaudière du système de génération de vapeur (10) éteinte, et
- division d'un volume entre le niveau minimum (MIN) et le niveau maximum (MAX) par le temps pour réduire le niveau de liquide dans le générateur de vapeur (14).

**7.** Système de génération de vapeur (10) d'un appareil de cuisson, le système de génération de vapeur (10) comprenant :

i) un ou plusieurs réservoirs de liquide (12),

ii) un générateur de vapeur (14) en communication fluidique avec un ou plusieurs desdits réservoirs de liquide (12) via une première conduite de liquide (16) et via une seconde conduite de liquide (22) et configuré pour convertir du liquide provenant d'un ou plusieurs desdits réservoirs de liquide (12) en vapeur, en particulier pendant un cycle de vapeur,

iii) un premier capteur de niveau de fluide (30) associé à un niveau minimum (MIN) de liquide dans le générateur de vapeur (14),

iv) un second capteur de niveau de fluide (32) associé à un niveau maximum (MAX) de liquide dans le générateur de vapeur (14),

v) une pompe de remplissage (20) située le long de la première conduite de liquide (16) et configurée pour contrôler l'écoulement du liquide sortant d'un ou plusieurs desdits réservoirs de liquide (12) et entrant dans le générateur de vapeur (14),

vi) une pompe de drainage (24) située le long de la seconde conduite de liquide (22) et configurée pour contrôler l'écoulement du liquide sortant du générateur de vapeur (14) et entrant dans un ou plusieurs desdits réservoirs de liquide (12), et

vii) une sortie de vapeur (28) en communication fluidique avec le générateur de vapeur (14) via une conduite de vapeur (26), et

viii) un système de commande (100) configuré pour exécuter les étapes de procédé suivantes selon l'une quelconque des revendications 1 à 6 :

- estimation d'un débit d'au moins l'une de la pompe de remplissage (20) et de la pompe de drainage (24) du système de génération de vapeur (10),
- obtention d'un premier débit de remplissage ($FR_{fp}$) de ladite pompe de remplissage (20) et/ou d'un premier débit de drainage ($FR_{dp}$) de ladite pompe de drainage (24),
- obtention, après un nombre prédéterminé de cycles de vapeur et/ou une durée, d'un second débit de remplissage ($FR_{fp}$) de la pompe de remplissage (20) et/ou d'un second débit de drainage ($FR_{dp}$) de la pompe de drainage (24),
- détermination d'une différence entre le débit de remplissage ($FR_{fp}$) et/ou entre le débit de drainage ($FR_{dp}$) au-delà d'un seuil,
- génération d'une notification à un utilisateur et/ou à un prestataire de service/maintenance indiquant que le système de génération de vapeur nécessite une maintenance.

**FIG. 1**

FIG. 2B

FIG. 2A

FIG. 3

EP 4 357 670 B1

FIG. 4

302

DETERMINE DECREASE IN FILL FLOW RATE
$FR_{FP}$ BEYOND THRESHOLD.

300

GENERATING NOTIFICATION THAT STEAM
GENERATION SYSTEM NEEDS SERVICING.

304

306

DETERMINE DECREASE DRAINAGE FLOW RATE
$FR_{DP}$ BEYOND THRESHOLD.

GENERATING NOTIFICATION THAT STEAM
GENERATION SYSTEM NEEDS SERVICING.

308

310

DETERMINE DECREASE IN STEAM FLOW RATE
$FR_{BOILER}$ BEYOND THRESHOLD.

GENERATING NOTIFICATION THAT STEAM
GENERATION SYSTEM NEEDS SERVICING.

312

**FIG. 5**

**EP 4 357 670 B1**

**REFERENCES CITED IN THE DESCRIPTION**

**Patent documents cited in the description**

- WO 2022017799 A1
- EP 3872404 A1